## Europäisches Patentamt
## European Patent Office
## Office européen des brevets

(19)

(11) Publication number: **0 056 682**
**B1**

(12) **EUROPEAN PATENT SPECIFICATION**

(45) Date of publication of patent specification: **10.04.85**

(51) Int. Cl.⁴: **A 23 D 3/00,** A 23 D 3/02, A 21 D 2/16, A 21 D 10/00

(21) Application number: **82300028.6**

(22) Date of filing: **05.01.82**

(54) **A process for the preparation of beads of fat and fat in the form of beads.**

(30) Priority: **06.01.81 US 222841**
**09.02.81 US 232499**

(43) Date of publication of application:
**28.07.82 Bulletin 82/30**

(45) Publication of the grant of the patent:
**10.04.85 Bulletin 85/15**

(84) Designated Contracting States:
**AT BE CH DE FR GB IT LI LU NL SE**

(56) References cited:
**EP-A-0 017 104**
**DE-C- 579 273**
**US-A-2 853 390**

(73) Proprietor: **UNILEVER PLC**
**Unilever House Blackfriars P O Box 68**
**London EC4P 4BQ (GB)**
(84) **GB**

(73) Proprietor: **UNILEVER NV**
**Burgemeester s'Jacobplein 1 P.O. Box 760**
**NL-3000 DK Rotterdam (NL)**
(84) **BE CH DE FR IT LI LU NL SE AT**

(72) Inventor: **Linteris, Lino Luigi**
**77 Ross Avenue**
**Demarest New Jersey 07627 (US)**
Inventor: **McNaught, John Patrick**
**7 Christopher Place**
**Saddle River New Jersey 07458 (US)**

(74) Representative: **Thomas, Susan Margaret et al**
**UNILEVER PLC Patents Division P.O. Box 68**
**Unilever House**
**London EC4P 4BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for the preparation of beads of fat, to beads of fat so prepared and to a fat in the form of beads.

Fats in the form of discrete particles such as beads, bits, chips and drops have a variety of uses in the food industry. Examples of the use of fat particles in food are disclosed in US—A—3 388 997 and US—A—4 086 367.

Various methods have been described for making particles of fat suitable for use in food. In one such method, the fat is extruded and diced to make beads of the desired size. In another method, the fat is melted and added to a mixer containing dry ice. These and other methods such as are described in US—A—3 388 997 and US—A—3 867 556, can lead to drops which are sticky and are not free flowing. Such drops often must be coated in order to prevent agglomeration and clumping. Moreover, the prior art methods can lead to drops which are not uniform in size, causing large amounts of particles that are either too large or too small and which must be reworked into beads of the proper size.

The problem of fat beads which are sticky and not free flowing is particularly acute for fat compositions which melt completely at temperatures below about 80°C. One example of such a fat is chocolate. It is however known to make truncated cones of chocolate, known as chocolate chips, by melting chocolate, which is a mixture of cocoa butter and solid matter derived from cocoa butter, forcing the molten chocolate through a dropping head containing nozzles. At the end of the nozzles the chocolate forms drops in the form of truncated cones. The drops fall onto a belt, are cooled and collected.

This process, however, leads to poor results when a fat rather than chocolate is used. In such cases, the fat cannot be made to form drops in the nozzles. If the fat is too fluid, it flows through the nozzles and collects in puddles on the belt on which the beads are collected. If the fat is not fluid enough, it solidifies in and clogs the nozzles. The need exists, therefore, for a process capable of producing beads of fat which are not sticky and have uniform size.

According to a first aspect of the present invention there is provided a process for preparing beads of fat characterised by:

a) melting the fat at a temperature of at most 93°C
b) cooling the melted fat to a temperature about 1.5 to 4.5°C below the clear point of the fat at which sufficient solids form to enable droplets of the fat to retain their shape,
c) forming droplets of the fat at that temperature and
d) cooling and collecting the droplets

In order to form commercially useful beads, a fat must be sufficiently firm to retain its shape at room temperature. In order to be sufficiently firm, the fat at room temperature should be at least 20% solids and preferably 50% as measured by NMR and should, moveover, have a melting point enabling the fat to be melted below about 80°C. The method for determining the percent solid in a fat is described in Madison et al, "Solid Fat Determination by Pulse NMR", J. Amer. Oil Chem. Soc., 328 (1978).

It is preferable that the fat is not heated to a temperature at which volatile components are lost. The loss of volatile components may cause the fat to lose desirable flavour and taste characteristics. Therefore, the fat should not be heated above 93°C, more preferably not above 79°C.

The beads can be made on similar equipment to that conventionally used to make chocolate chips. An example of the equipment suitable for use in the present process is the chocolate depositor made by the National Equipment Corp. of the Bronx, New York and Chicago, Illinois. The depositor contains a dropping head which is a series of nozzles through which the fat is forced by means of pistons. The fat forms drops at the end of the nozzles and the drops fall onto a belt as truncated cone-shaped beads. The beads are directed by the belt to a cooling chamber in order to promote further crystallisation.

Auxiliary equipment can include a processing vessel for melting the fat. One suitable vessel is a hemispherical kettle with centrally mounted agitators. Kettles of this type are available from the Hamilton, Groen and Cherry Burrell Companies.

Further auxiliary equipment can include a heat exchanger. Although any suitable heat exchanger may be used, a preferred heat exchanger is water-cooled scraped surface heat exchanger known as a thermutator.

In a preferred embodiment of the present process, fat which contains at least 20% solids at room temperature is first heated to a temperature above its melting point in a suitable vessel such as a water-jacketed kettle. It is preferable that the fat be completely melted before being shaped. If the fat is not completely melted, the melt may not solidify uniformly, the composition of the beads may not be homogeneous upon solidifying and the beads may have a sandy feel. The batch size need not be critical. An appropriate batch size can be about 500 to 3,000 pounds (about 227 to 1,364 kg) and preferably 1,000 to 1,400 pounds (about 455 kg to 636 kg). After the fat has completely melted, it is cooled. It can be important that the fat is cooled slowly. If the fat is cooled too rapidly, the solids that form can be too hard and the mixture may lose its fluidity. Difficulties in forming the drops may arise and drops may be formed that are not uniform. The lowering of the temperature should in practice be sufficiently slow if it occurs in a water-cooled kettle or heat exchanger. The heat exchanger should preferably not be cooled by ammonia or freons. Cooling is continued until the fat is at a temperature between 1.5 and 4.5°C below the clear point of the fat. The clear point is defined as the temperature at which solids are first visible when the completely melted fat is cooled.

It is preferable that crystallisation-promoting solids be added to the melted fat in order to aid the crystallisation process by providing seed nucleii. The solids can be added either when the temperature of the melt reaches its maximum or shortly thereafter during the cooling process. The solids preferably have a composition the same as or very similar to the melt. They are preferably economic reasons scrap solids from previous processes. Most of the re-used bead solids melt in the kettle, but higher melting portion which do not melt aid in promoting crystallisation of the melted fat. The amount of re-used solids added can be about 5 to 25% and is preferably 10 to 20% by weight.

When the temperature of the fat is 1.5 to 4.5°C below the clear point, a waiting period begins. During the waiting period, sufficient solid is allowed to form to permit the fat to retain its shape when it forms a drop at the end of the nozzle of the dropping equipment. The amount is most readily determined by trial and error. One helpful guideline is that when the correct amount of solid is present, the fat changes from being almost clear or slightly translucent to being very translucent or nearly opaque. It is believed that the amount of solid that will permit the fat drop to retain its shape is about 5 to 15% of the weight of the drop.

The waiting period may be as short as three minutes or as long as fifteen minutes, and is preferably five to ten minutes. It is critical that the waiting period be long enough to permit sufficient solids to form in the melt. For example, fats such as butter and margarine melt to an essentially clear state, although some milk solids are present. These milk solids are not sufficient to permit the formation of drops according to the present process. Upon cooling the melted butter or margarine, therefore, it is necessary to precipitate sufficient solids in order to form drops which retain their shape.

When the proper amount of solids has formed, the mixture can be directed to a dropping head where it is formed into drops at the end of nozzle. The drops preferably fall onto a belt, where they are cooled and collected. The beads of fat may be coated in order to prevent agglomeration, but when made by the present process coating need not be necessary. Suitable coatings include confectioners sugar and flour.

The beads can contain other ingredients, if desirable. Thus, common colourants and preservatives, if necessary, may be added. Suitable colouring agents include β-carotene, annatto, carrot oil and corn gluten. Suitable preservatives include tertiary butyl hydroquinone, sodium benzoate, potassium sorbate and the like.

The shape of the drops should preferably be that of a truncated cone, although depending upon conditions such as temperature and the amount of time the drops spend in the nozzle the drops may alternatively be spherical. The size of the beads is not critical. Commercially useful beads may be formed that are as small as 3 millimetres in diameter or as large as 25 millimetres or even higher. The size of the beads is determined mainly by for example the size of the nozzles employed in the dropping head.

When making beads according to the preferred embodiment of the present process, the dropping head is preferably made from stainless steel due to its inertness and resistance to corrosion. Brass is preferably to be avoided due to the tendency of brass to oxidise fat. Such oxidation can cause the fat to become rancid and acquire a poor taste.

According to a second aspect of the present invention there is provided a butter bread composition suitable for use in food characterised in that the composition comprises:

a) 20 to 70% butter containing no more than 4% water; and
b) a quantity of a high melting triglyceride sufficient to produce a butter bead composition containing a percentage of solids as measured by NMR of:

20 to 43% at 36°C

10 to 28% at 42°C

the butter bead composition containing no more than 2.5% water and having a visible size not greater than about 62 mm.

The butter bead composition is suitable for inclusion in dry food mixes such as pancake mixes and the like.

It is to be understood that the present invention includes dry food mixes, such as pancake mixes and the like, which contain the beads. The solid flavour beads contain real butter and at least one triglyceride which has a higher melting point than butter. Such triglycerides are referred to as "high melting triglyceride" herein.

The batter prepared from the above-mentioned mixes contains butter beads which are visible to the consumer. Upon adding the batter to a griddle or pan in order to cook the pancakes, the butter beads are visible on the surface. During cooking, the beads visibly melt providing a visual signal to the consumer thereby enhancing the commercial value of the product. In addition, the beads allow a regular mix to be prepared without adding shortening at the time of cooking. The use of the present composition moreover in dry mixes can allow the beads to remain solid in the presence of flour so that during normal transport and storage rancidity and mould formation can be substantially reduced.

The present composition is especially well suited for the preparation of pancakes. Accordingly, the following discussion refers mainly to pancakes, although it should be understood that whatever is said about pancakes is also applicable to biscuits, waffles, griddle cakes, corn bread and muffins.

Pancakes are normally prepared by adding eggs, milk and shortening to a dry mix of flour, leavening, salt and minor ingredients. Such a mix is called a "regular" mix and the like have also been used.

Alternatively, pancakes may be made by adding water to a "complete" mix, which is the same as a "regular" mix except the eggs, shortening and milk, in powdered form, are already included.

The addition of eggs, shortening and milk to a regular mix or of water to a complete mix forms a paste-like mixture known as the batter. The batter is cooked to form the pancake or other produce. Cooking as used in the instant specification is a term which includes baking, frying, griddling, or other methods of food preparation.

It is customary to flavour pancakes with, for example, fruit, syrup and butter. Although pancakes are customarily flavoured after they are prepared, there are advantages to pre-flavouring pancakes by including the flavouring in the pancake mix. One advantage is increased convenience. Another advantage is the ability of the consumer to see the pancakes being flavoured as they are prepared. It adds to the enjoyment of eating pancakes when the consumer first sees the butter floating on the batter and then watches the butter melt as the batter is heated on a griddle or in a pan. Such a consumer signal increases the commercial acceptance of the product.

While a butter-like flavour can be imparted to pancakes by means of butter substitutes such as margarine and butter oil many consumers prefer the presence of real butter. As a result, the ability to list real butter among the ingredients improves the chances for commercial success of a food product.

One known method for pre-flavouring food products is by the addition of solid flavour beads. For example, US—A—4 086 367 describes the addition to food compositions such as pancake mixes of "bits" of less than 0.5 mm containing fruit flavours mixed with fat. The bits are made shelf-stable and self-preserving by limiting the amount of water in the bits to less than 5%. The Wiley melting point of the fat used to make the bits is between 32 and 51°C.

One problem with the fruit bits described in US—A—4 086 367 is that the flavour is not of real butter. In addition, bits as small as 0.5 mm would normally not be readily visible in the final product unless the colour of the bits contrasted sharply with the ingredients with which the bits are mixed. For example, 0.5 mm bits containing blueberry flavouring might be visible although bits containing only butter and fat are not readily visible.

Moreover, if the melting point of the bits is too low, the bits may melt during shipping and storage. This is especially true during the summer months where temperatures of 40°C and higher in warehouses are not unusual. If the beads melt, they wet the flour and the mix becomes more susceptible to mould growth and other deleterious changes.

It is known to use beads of butter in pastry. For example US—A—3 388 997 describes the use in Danish pastry of 1.59 to 12.7 mm particles of butter, which may be modified by the addition of hard fat. These particles are melted during the baking of the pastry and are, therefore, melted before the consumer sees them. An advantageous visual signal of the butter melting is, therefore, not realised. In addition, the 16 to 20% water normally present in butter is not removed from the particles described US—A—3 388 997. Upon long storage, the presence of this water may cause the butter to spoil due to mould or rancidity. Such particles are not, therefore, suitable for use in a dry mix which may be stored several months before use.

The butter used in the present composition is natural butter from which water has been removed as described below. Suitable butters include cultured butters, high score butters, and butters of lower scores, such as 90 score butter.

Natural butter has a water content of about 16 to 20%. As a result of the water present, natural butters spoil due to mould or rancidity if stored more than about 60 to 90 days at 15 to 70°C or in about a week at room temperature. To eliminate this problem, the butter of the present composition is substantially dehydrated by a process which removes only volatile materials such as water but the not water-soluble solids. Such methods involve heating the butter and/or subjecting the butter to reduce pressure. Heating the butter at atmospheric pressure is preferable since the loss of flavour is minimised. Heating may be done electrically, by flame or by steam. Preferably, the butter is placed in a container surrounded by a jacket containing low pressure steam, for example at a pressure of about 10 to 20 psi (689.5—1379 mb). After about 15 to 20 hours under these conditions, about 75 to 94% of the water has been removed. Conventional butter oil differs from the dehydrated butter employed in the present composition in that conventional butter oil is traditionally prepared by melting the butter and removing the aqueous phase that separates out. Water soluble materials are thus removed with the aqueous phase.

According to the present composition butter containing no more than 4% water and preferably no more than 1% water is added to higher melting triglycerides to produce substantially anhydrous butter beads which contain less than 2.5% and preferably less than 1% water.

The butters useful in the present composition generally contain about 95 to 98% fat and about 1 to 2% milk solids. (These and all percents used herein are by weight unless otherwise specified). One butter found to be useful in the present composition is anhydrous "Flavor-up" (Registered Trade Mark) butter obtained from Armour & Co., Water is removed by heating at atmospheric pressure. The butter contains at least 90% fat and at most 2.5% water.

# 0 056 682

The removal of water from butter can substantially reduce spoilage due to mould and rancidity. In addition to the amount of water present, the stability of the butter beads can depend upon the number of microorganisms present. The presence of microorganisms can be largely reduced during the drying process. It is preferable that the butter beads of the present composition satisfy the following bacteriological criteria:

| | |
|---|---|
| Total Plate Count | less than 100 per gram |
| Mould and Yeast | less than 10 per gram |
| E. Coli | less than 10 per gram |
| Staphylococcus | less than 10 per gram |

By satisfying the water and bacteriological criteria described above, rancidity and mould formation can be substantially reduced. By "substantially reduced rancidity and mould formation" is meant that the butter beads and the dry food mix containing the butter beads need not become noticeably rancid or mouldy for at least about 2 years at about 1.5°C to 7°C, preferably for an indefinite period; about 1 year at room temperature, preferably 1.5 years; and about 1 month at 40°C, preferably 6 months.

The rate of rancidity and mould development depends upon the humidity in the air. The butter beads, like foods generally, will become mouldy or rancid more rapidly at higher humidities.

The melting point of natural butter is normally about 38°C. If this melting point is not modified, a problem arises upon the storage of the butter beads or a dry food mix such as pancake mix containing the butter beads. During summer months, it is not unusual for warehouses to record temperature of 40°C or more. At such temperatures, solid butter melts, causing the beads to lose their structure and to wet the flour, which may undergo deleterious changes as a result.

In order to obviate this problem, the butter used in the present composition is first blended with another triglyceride or mixture of triglycerides with a higher melting point than butter. The composition of the blend should be such that the beads remain solid during normal shipping and storage conditions, such as temperatures of at least 40°C. The beads of the present composition can remain solid at 40°C if the melting point of the beads is at least 45°C, preferably 45 to 50°C.

By "solid" is meant that upon being distributed in a circled area of 1 cm on 0.02 mm Kraft brown paper at 45°C for 7 days, the beads lose no more than about 25% of their weight, preferably no more than 10 to 20%, and most preferably, less than about 10%.

The upper limit of the melting point of the butter beads can be determined by the temperature to which the batter is designed to be heated during the preparation of the pancakes or other food. In order to take full advantage of the present composition the butter beads should preferably melt during the heating of the batter. Thus, the upper limit of the melting point may be dependent on the temperature to which the batter is heated. In a typical pancake batter, for example, the melting point of the butter beads should preferably not exceed 55°C.

Fats, such as the butters and triglycerides used in the present composition, are often described by dilatation values or by the percentage of solids at various temperatures as determined by NMR.

Dilatation values are based on the volume increase of fat upon heating and are normally determined at various temperatures using a dilatometer as is described in GB—A—859 769. These values range from 0 to 2400 and are related to the percentage of solids in the fat. A dilatation of 0 represents an all liquid triglyceride while a dilatation of 2400 represents an all solid triglyceride. Most fats fall between these extremes. For example, commercial soft margarines have dilatation values of about 300 at 20°C. Dilatation values of about 1600 at 20°C and above represent extremely hard fats.

The percentage of solids can also be determined using a pulsed NMR technique as described in Madison et al as above. According to this method, the percentage of solids in a fat is determined by the number of hydrogen atoms in the solid and liquid phases. The fast and slow decaying magnetic signals, which are attributed to the H nucleii in the solid and liquid phases, respectively, are converted to the percentage of solids. An example of the type of instrument used is the Pulse NMR instrument manufactured by the Brukner Instruments Co. under the name Minispec P20i.

In order to have the properties required for the butter beads of the present composition, the mixture of butter and high melting triglycerides should have percentage of solids as determined by NMR of 20 to 43% at 36°C and 10 to 28% at 42°C; preferably 70 to 90%, more preferably about 79%. At 0°C; 60 to 70%, more preferably about 62% at 20°C; 30 to 43%; more preferably about 33% at 36°C; and 10 to 28%, more preferably about 19% at 42°C.

The high melting triglycerides useful in the present composition may be derived from any common commercially available edible oil or mixture such as those described in Bailey's Industrial Oil and Fat Products, edited by Daniel Swern, Volume 1, 4th Edition, John Wiley & Sons, 1979. Suitable high melting triglycerides include vegetable oils such as soybean, cottonseed, palm, sunflower, coconut, and safflower oils, animal fats such as edible tallow and lard, and mixture and fractions thereof. One high melting triglyceride that may be used to prepare the butter beads is "KLX flakes" supplied by Durkee Industrial

5

Foods Group of SCM Corp. These flakes are derived from hydrogenated soybean and cottonseed oils and are formed into flakes with a chill roll. The dilatation values of KLX flakes are as follows:

| Temperature (°C) | Dilatation values | % Solids as determined by NMR |
|---|---|---|
| 0 | 1800—2000 | 96 |
| 20 | 1800—2000 | 95 |
| 36 | 1600—1800 | 70 |
| 42 | 1400—1600 | 45 |

Another high melting triglyceride found to be useful in the present composition is "IS 80" supplied by Lever Bros. Company. "IS 80" is made from hydrogenated soybean, cottonseed and palm oils. The dilatation values $(D_T)$ of IS 80 are as follows:

| | | % Solids as determined by NMR |
|---|---|---|
| $D_{20}$ | 1060—1300 | 27 |
| $D_{42}$ | 700—1000 | — |
| $D_{60}$ | 300 max | — |

A third high melting triglyceride found to be useful in the present composition is "17 soybean stearine flakes" supplied by Durkee. This triglyceride is a fully hydrogenated soybean oil formed into flakes with a chill roll and has an iodine value of at most 3. Mixtures of these triglycerides with each other or with other triglycerides may alternatively be employed.

The composition of the butter beads depends upon such factors as the melting point desired, the cost, and the quality of the flavour desired. The beads may contain between 20 and 70 weight percent butter, preferably 30 to 70% butter. Beads with about 33% and about 50% butter are especially desirable.

The percentage of solids in the high melting triglyceride depends on the amount of butter in the butter beads. As the amount of the butter in the butter beads increases, the percentage of solids in the high melting triglyceride should preferably also increase in order to harden the butter and raise the melting point of the composition. For example, when the beads contain 33% butter, the approximate percentage of solids as determined by NMR in the high melting triglyceride should be 80 to 100%, preferably 90% at 0°C; 60 to 95%, preferably 84% at 20°C; 50 to 70%, preferably 56% at 36°C; and 25 to 50%, preferably 39% at 42°C.

When the beads contain 50% butter, the approximate percentage of solids as determined by NMR in the high melting triglyceride should be 80 to 100%, preferably 90% at 0°C; 65 to 90%, preferably 85% at 20°C; 55 to 75%; preferably 60% at 36°C; and 35 to 55%, preferably 45% at 42°C.

The beads of the present composition may be uniformly blended by any suitable method into a dry food mix such as with a ribbon blender. The mix should preferably contain at least flour, such as wheat, barley or corn flour, and leavening, such as sodium bicarbonate, sodium aluminium phosphate or monosodium phosphate. Salt, milk solids, egg solids, sweeteners, other flavouring, colouring agents and other ingredients suitable for making foods such as pancakes from a batter may also be included.

The percent of flavour beads to be used in the dry food mix depends upon the amount of butter desired in the pancake and the fraction of the bead that is butter. A pancake mix should preferably contain at least 1% butter in order for the butter flavour to be imparted to the pancake. Thus, for example, if the flavour beads contain 50% butter and 50% higher melting triglyceride, there should be at least 2% butter beads in the mix to obtain 1% butter.

It has been found that 2% butter in the mix is particularly advantageous. When the butter beads contain 33% or 50% butter, the beads then constitute 6% or 4% of the pancake mix, respectively.

The upper limit of the amount of the butter beads in the mix is determined by the amount of fat that can be accommodated in the pancake without the pancake becoming oil-tasting due to the presence of pools of fat. Such pools can occur if the pancake mix contains more than about 25% of the beads.

The size of the beads should preferably be between 3 and 62 mm and preferably between 5 and 25 mm. The lower limit on the size of the beads is determined by the ability of the consumer to see the beads in the batter while the pancakes are being prepared. The size can alternatively be measured in terms of the number of beads per unit weight of beads prepared at an average density of the butter beads of about 0.83 to 0.85 g/cc. A bead size of about 5 mm corresponds to about 10,000 beads per pound (approx 0.45 kg). This size of bead when included at a 4% level in dry pancake mix will result in about 16 beads per pancake.

6

The upper limit on the size of the beads is determined by the number of beads desired in the pancake. If the beads have a diameter of about 10 mm, which corresponds to about 2500 beads per pound (about 0.45 kg), there will be about 4 beads in an average pancake made from a mix containing 4% by weight of butter beads. It is, therefore, desirable that the butter beads should not be greater than 10 mm in diameter in a mix containing 4% butter beads since the number of beads per pancake would be too small and there is a possibility that some of the pancakes would not contain any beads. A mixture of beads of different diameters may alternatively be used, in which case the diameters given are average diameters.

The maximum size of the beads can be increased by increasing the percentage of the butter beads in the pancake mix. Thus, if the beads constitute 6% of the mix, the maximum size of the beads is preferably about 15 mm; if the beads constitute 10% of the mix, the maximum size of the beads is preferably 25 mm; and if the beads constitute 25% of the mix, the maximum size is preferably 62 mm.

The butter beads may also contain other ingredients, if desirable. Thus, common colourants and preservatives, if necessary, may be added. Suitable colouring agents include β-carotene, annatto, carrot oil and corn gluten. Suitable preservatives include tertiary butyl hydroquinone, sodium benzoate, and potassium sorbate.

The beads may optionally be coated in order to further prevent them from agglomerating together. Suitable coatings include sugars, such as confectioners sugar, and flour.

The beads may be manufactured by the present process which is the preferred method. Other methods may however be employed. Examples of other methods include: extruding a butter-triglyceride melt into rods and dicing the rods into suitable lengths; and adding melted butter and higher melting triglycerides to a mixer, such as a Littleford mixer, containing powdered dry ice, mixing the fat and dry ice so as to form discrete beads of fat and optionally coating and/or screening the beads to obtain beads of the desired size.

The beads may be shipped in ordinary packages, such as cardboard boxes and the like. The cardboard is preferably coated with a material to prevent the beads from staining the box. Such materials include scotchband FC-807 (Registered Trade Mark), which is a fluorinated oil repellant agent supplied by Minnesota Mining Corporation. The box may alternatively be lined with a plastic liner, such as polyethylene, polyvinylidene chloride and the like.

The beads of the present composition and the food products containing them may be shipped and stored by methods well known in the food industry. The beads contain an amount of high melting triglyceride calculated to allow the beads to remain substantially solid at the temperature encountered during shipping, as discussed above.

Embodiments of the present invention will now be described, by way of example only, with reference to the following examples.

Example I

A fat bead is produced which contains 66.4% KLX flakes supplied by the Durkee Industrial Foods Group of SCM Corp., 33.6% dehydrated butter and .0009% beta-carotene.

Two 200 gallon (757 litre) Hamilton kettles equipped with scraper blade agitators and a second counter revolving agitator are used for batch blending. The batch size is 1000 to 1400 pounds (454 to 636 kg). The butter is allowed to stand over night at room temperature or slightly above (i.e. 21—32°C). The KLX flakes are added to the kettles and melted. The pre-softened butter and a mixture of the beta-carotene and about 100 grams of KLX flakes are added to the melted KLX flakes in the kettle. The mixture is heated to 74 to 77°C and then cooled to 54 to 57°C. At this temperature, approximately 45 to 91 kg of beads made in a previous process are added to the blend. The re-used beads substantially melt although some solids remain as an aid in crystallising the melted fat. When most of the re-used beads have melted, the blend in the kettle is further cooled. At a temperature of 43 to 46°C solids begin to form. The batch is held at this temperature until it is judged that sufficient solids have formed to permit proper bead formation.

The batch is then pumped through a thermutator in order further to lower the temperature of the melt to 42 to 43°C and to assure a uniform temperature. The mixture next passes to a food hopper and then to a stainless steel dropping head having external heat tracer tapes to unclog the nozzles. The beads form at the end of the nozzles and drop onto a 23 metre belt which leads the beads to a cooling tunnel. The cooled beads are removed from the belt by a scraper bar, screened, and placed into bags. The packed bags are transferred promptly to a cooled area for storage at between 4 to 10°C in order to avoid clumping.

Examples II to IV

Two 200 gallon (757 litre) Hamilton kettles equipped with scraper blade agitators and a counter revolving agitator are used to blend the butter and high melting triglycerides. The batch sizes are about 1000 to 1400 pounds. The butter and IS 80 oil are warmed separately at 32—49°C overnight prior to use.

KLX flakes are added to the kettles. Heat is applied and agitation begun when sufficient flakes have melted. The IS 80 oil is added with continuing agitation. When this mixture is melted, 17 stearine flakes and the pre-softened butter are added. B-carotene adsorbed on about 100 grams of KLX flakes is then added for colouring. The mixture is heated with continuing agitation to 74—77°C, then cooled to 54—57°C. About 100—200 pounds (about 45—90 kg) of previously prepared beads, if available, are added to pre-crystallize the oil blend. Cooling is continued. Solids begin to form at temperatures between 43—46°C. The melt is formed into beads by passing thorough a dropping head containing a multiplicity of nozzles. The beads fall onto a cooling belt, which directs the beads through a cooling tunnel. A scraper bar is used to remove the beads from the belt. The beads are packaged and promptly cooled to 4—10°C to avoid agglomeration.

If coating is required, the beads are transferred to a drum coater before being packaged.

The following formulations were prepared by the above method:

|  | Example II | Example III | Example IV |
|---|---|---|---|
| High melting triglyceride KLX flakes (Durkee) | 40.43 | 47.6 | 66.4 |
| IS—80 (Lever) | 16.00 | 15.8 | — |
| 17 SBO Stearine (Durkee) | — | 3.0 | — |
| Butter (Atmospherically dried "Butter-UP") | 28.57 | 33.6 | 33.6 |
| 12X Confectioners Sugar coating (Amstar) | 15.00 | — | — |
| β-Carotene | 2200 IU/Lb | 2200 IU/Lb | 2200 IU/Lb |

Example V

The ingredients used in this Example are as follows:

| | |
|---|---|
| KLX Flakes (Durkee) | 40.43% |
| IS-80 (Lever) | 16.00% |
| Atmospherically (dried butter) (Amour & Co) | 28.57% |
| Confectioners Sugar—12X (Amstar) | 15.00% |

The KLX Flakes, IS-80, and butter are melted at 63° to 68°C. The melted blend is added to an equal weight of powdered dry ice in a Littleford mixer with agitation. The oil blend addition is carried out as quickly as possible in about 1 to 2 minutes depending on batch size. Mixing is then continued for about 5 to 15 seconds depending on the particle size desired. (Shorter times produce larger particles.) The chilled beads and dry ice mixture are then screened while still cold. Beads passing through a 4 mesh U.S. standard screen (4.76 mm opening) and held on a 12 mesh U.S. standard screen (1.68 mm opening) constitute the desired cut.

Fines are remelted and reprocessed. The coarse fraction can, if desired, be further comminuted or remelted for reprocessing.

After most of the dry ice has sublimed, the beads are coated with 15% confectioners sugar (12X) using a Dravo wheel or a coating pan. If moisture conditions are low, the beads are fogged with water from a spray gun during the coating operation.

Complete pancake mixes
Example VI

The pancake mix is prepared in a 2000 lb (909 kg) batch size in a conventional ribbon mixer. The formulation is as follows:

| | % |
|---|---|
| Wheat flour | 51.34 |
| Yellow corn flour | 22.80 |
| Buttermilk powder | 2.43 |
| Whey powder | 2.43 |
| Corn sugar | 7.86 |
| Salt | 2.63 |
| Soda | 1.55 |
| Leavening: (Sodium bicarbonate, sodium aluminium phosphate and monosodium phosphate) | 1.88 |
| Powdered egg | 1.08 |
| Butter Beads (Hydrogenated Soybean, Cottonseed and Palm Oils) (4.0%) Butter (2.0%) β-Carotene trace | 6.0 |
| | 100.00 |

All of the dry ingredients are weighed and added to the mixer and mixed for about ten minutes. The butter beads are then weighed and added to the mixer and mixed for about five minutes. The mix is then screened to remove lumps larger than the beads and then packed.

Example VII

The following formulation is used to prepare a dry corn meal based complete pancake mix according to the method of Example VI.

| | % |
|---|---|
| Yellow Corn Meal | 60.0 |
| Enriched Wheat Flour* | 14.8 |
| Malted Barley Flour | 3.0 |
| Corn Sugar | 5.0 |
| Powdered Shortening | 4.0 |
| Salt | 2.0 |
| Sodium bicarbonate | 1.5 |
| Sodium aluminium phosphate | 1.0 |
| Corn syrup solid | 1.0 |
| Powdered whole egg solids | 1.0 |
| Monocalcium phosphate | 0.7 |
| Butter Beads (Hydrogenated Soybean, Cottonseed and Palm Oils) (4.0%) Butter (2.0%) β-Carotene trace | 6.0 |
| | 100.0 |

* Usual enrichment mixture of vitamin

**0 056 682**

Example VIII
Regular pancake mix

|  | % |
|---|---|
| Wheat flour (enriched)* | 57.55 |
| Yellow corn flour (enriched) | 25.86 |
| Whey Powdered | 4.70 |
| Corn Sugar | 0.48 |
| Soda (sodium bicarbonate) | 1.51 |
| Stabil-9 phosphates (Same as Example VI) | 1.79 |
| Butter Beads (Same as Example VI) | 6.00 |
|  | 100.00 |

* Enriched with vitamins and nutrients

Example IX
Biscuit mix
The following biscuit mix was prepared according to the method of Example VI.

|  | % |
|---|---|
| Wheat flour (enriched)* | 79.1 |
| Malted Barley Flour | 5.0 |
| Powdered Shortening | 4.0 |
| Corn Syrup Solids | 2.0 |
| Sodium bicarbonate | 1.5 |
| Sodium aluminium phosphate | 1.0 |
| Corn Sugar | 0.7 |
| Monocalcium phosphate | 0.7 |
| Butter Beads (Same as Example VI) | 6.0 |

* Enriched with niacin, iron, thiamine, mononitrate, riboflavin.

Example X
Pancakes from complete mix
Fourteen to sixteen pancakes are made from complete mixes such as in Examples VI and VII by preheating a griddle to about 205°C. A quarter of a cup of water and one cup of the dry mix are mixed in a bowl until the dry ingredients are moistened. The resulting batter is poured onto the hot griddle. The butter beads visibly melt during cooking.

Example XI
Pancakes from regular mix
Pancakes are made from a regular mix, such as the mix of Example VIII, by the same method as from a complete mix, such as the method of Example XI, except that one cup of milk and one egg is added to one cup of mix to make twelve to fourteen pancakes.

Example XII
Consumer tests
In order to demonstrate that the inclusion of 2% butter makes a consumer perceptible difference, 104 female household heads who have served pancakes at home in the past two months were presented with two cooked pancakes. One, the experimental pancake, contained 2% butter plus 4% liquid vegetable oil.

10

The other, the control, contained 6% liquid vegetable oil. After tasting both products, each participant was asked to determine which pancake had the most butter flavour. The experimental pancake containing the butter wsa selected by 62 of the participants while the control pancake, containing no butter was selected by 42 of the participants. This difference, which is significant at the 97% level, demonstrates that there is a consumer perceptible difference between pancakes containing butter and pancakes containing no butter.

In order to ascertain consumer reaction to the "butter" signal of the proposed pancake mix, two tests were carried out. One test compared the Aunt Jemima (Regd. Trade Mark) Regular Pancake Mix with a Regular Pancake Mix containing Martha Gooch (Regd. Trade Mark) Regular Pancake Mix and 7% butter beads containing 33% butter. By the second test, the Aunt Jemima Complete Mix was compared with a Complete Mix containing Martha Gooch Complete Mix with 7% butter beads containing 33% butter. The results are as follows:

### Regular mix

| | |
|---|---|
| Prefer Martha Gooch Regular Mix with 7% butter beads | 62% |
| Prefer Aunt Jemima Regular Mix | 26% |
| No preference | 12% |
| Net preference for Regular Mix containing butter beads | 36% |

### Complete mix

| | |
|---|---|
| Prefer Martha Gooch Complete Mix with 7% butter beads | 66% |
| Prefer Aunt Jemima Complete Mix | 23% |
| No preference | 11% |
| Net preference for Complete Mix containing butter beads | +43% |

**Claims**

1. A process for preparing beads of fat characterised by selecting a fat having an NMR solids content at room temperature of at least 20% and a melting point enabling the fat to be melted below about 80°C.

   a)  melting the fat at a temperature of at most 93°C
   b)  cooling the melted fat to a temperature about 1.5 to 4.5°C below the clear point of the fat at which sufficient solids form to enable droplets of the fat to retain their shape,
   c)  forming droplets of the fat at that temperature and
   d)  cooling and collecting the droplets

2. A process according to claim 1 wherein the drops are in the form of truncated cones.

3. A process according to claim 1 or claim 2 wherein the melted fat is nearly opaque before being formed into drops.

4. A process according to any one of the preceding claims wherein solids are added to the melt before the melt reaches the temperature of 1.5 to 4.5°C below the clear point of the fat in order to aid crystallisation.

5. A process according to any one of the preceding claims wherein the fat is butter or margarine.

6. A process according to claim 5 wherein the butter is dehydrated.

7. A process according to claim 6 wherein the fat further contains a high melting triglyceride with a higher melting point than butter.

8. A butter bead composition, suitable for use in food characterised in that the composition comprises:

   a)  20 to 70% butter containing no more than 4% water; and
   b)  a quantity of a high melting triglyceride sufficient to produce in the butter bead composition a percentage of solids as measured by NMR of:

          20 to 43% at 36°C

          10 to 28% at 42°C

the butter bead composition containing less than 2.5% water and having an average visible size not greater than about 62 mm.

9. A butter bead composition according to claim 8 wherein the melting point of the butter bead composition is at least 45°C.

10. A butter bead composition according to claim 8 or claim 9 wherein the butter bead composition melts between 45°C and 50°C.

11. A butter bead composition according to any one of claims 8 to 10 wherein the beads remain solid at 40°C.

12. A butter bead composition according to any one of claims 8 to 11 wherein the high melting triglyceride is derived from hydrogenated soyabean, palm oil, or mixtures thereof.

13. A butter bead composition according to any one of claims 8 to 12 wherein the size of the beads is from 3 to 62 mm.

14. A butter bead composition according to claim 13 wherein the size of the beads is from 5 to 25 mm.

15. A butter bead composition according to any one of claims 8 to 14 wherein the butter contains no more than 1% water.

16. A butter bead composition according to any one of claims 8 to 15 containing less than 1% water.

17. A butter bead composition according to any one of claims 8 to 16 wherein the percentage of solids as measured by NMR are:

70 to 90% at 0°C

60 to 70% at 20°C

30 to 43% at 36°C

10 to 28% at 42°C

18. A dry food mix comprising flour, an effective amount of leavening and 2 to 25% by weight of butter beads according to any one of claims 8 to 17 or as prepared by a process according to any one of claims 1 to 7.

19. A dry food mix according to claim 17 or claim 18 wherein the mix is suitable for preparing pancakes, biscuits, rolls, waffles, griddle cakes, corn bread or muffins.

20. A dry food mix according to any one of claims 18 or 19 including milk and egg solids.

21. A batter prepared from a dry food mix according to any one of claims 18 to 20

22. Cooked foodstuff prepared from a batter according to claim 21.

**Patentansprüche**

1. Verfahren zur Herstellung von Fettperlen, dadurch gekennzeichnet, daß man ein Fett mit einem NMR-Feststoffgehalt bei Raumtemperatur von wenigstens 20% und einem Schmelzpunkt, der ein Schmelzen des Fettes unterhalb etwa 80°C gestattet, auswählt,

a) das Fett bei einer Temperatur von höchstens 93°C schmilzt,
b) das geschmolzene Fett auf eine Temperatur von etwa 1,5 bis 4,5°C unterhalb des Klarpunktes des Fettes, bei welcher eine ausreichende Menge an Feststoffen gebildet wird, um den Fettröpfchen die Beibehaltung ihrer Gestalt zu ermöglichen, kühlt,
c) Fettröpfchen bei dieser Temperatur bildet und
d) die Tröpfchen kühlt und sammelt.

2. Verfahren nach Anspruch 1, dadurch gekennzeichnet, daß die Tropfen eine stumpfkeglige Form aufweisen.

3. Verfahren nach Anspruch 1 oder 2, dadurch gekennzeichnet, daß das geschmolzene Fett vor seiner Formung zu Tropfen nahezu undurchsichtig (opak) ist.

4. Verfahren nach einem der vorhergehenden Ansprüche, dadurch gekennzeichnet, daß man der Schmelze Feststoffe zusetzt, bevor die Schmelze die Temperatur von 1,5 bis 4,5°C unterhalb des Klarpunktes des Fettes erreicht, um die Kristallisation zu unterstützen.

5. Verfahren nach einem der vorhergehenden Ansprüche, dadurch gekennzeichnet, daß das Fett Butter oder Margarine ist.

6. Verfahren nach Anspruch 5, dadurch gekennzeichnet, daß die Butter entwässert ist.

7. Verfahren nach Anspruch 6, dadurch gekennzeichnet, daß das Fett außerdem ein hochschmelzendes Triglyzerid mit einem höheren Schmelzpunkt als Butter enthält.

8. Butterfett in Form von Perlen, das zur Verwendung in Nahrungsmitteln geeignet ist, dadurch gekennzeichnet, daß die Zusammensetzung

a) 20 bis 70% Butter mit einem Gehalt von nicht mehr als 4% Wasser, und

b) eine Menge eines hochschmelzenden Triglyzerids, die ausreichend ist, um in der Zusammensetzung der Butterperlen einen Prozentsatz an Feststoffen, gemessen durch NMR, von

20 bis 43% bei 36°C

10 bis 28% bei 42°C

zu ergeben,

enthält, wobei die Zusammensetzung der Butterperlen weniger als 2,5% Wasser enthält und die Perlen eine mittlere sichtbare Größe von nicht overhalb etwa 62 mm aufweisen.

9. Butterfett in Form von Perlen nach Anspruch 8, dadurch gekennzeichnet, daß der Schmelzpunkt der Zusammensetzung der Butterperlen wenigstens 45°C beträgt.

10. Butterfett in Form von Perlen nach Anspruch 8 oder 9, dadurch gekennzeichnet, daß die Zusammensetzung der Butterfettperlen zwischen 45°C und 50°C schmilzt.

11. Butterfett in Form von Perlen nach einem der Ansprüche 8 bis 10, dadurch gekennzeichnet, daß die Perlen bei 40°C fest bleiben.

12. Butterfett in Form von Perlen nach einem der Ansprüche 8 bis 11, dadurch gekennzeichnet, daß das hochschmelzende Triglyzerid von hydriertem Sojabohnenöl, hydriertem Palmöl oder Gemischen hiervon abgeleitet ist.

13. Butterfett in Form von Perlen nach einem der Ansprüche 8 bis 12, dadurch gekennzeichnet, daß die Größe der Perlen im Bereich von 3 bis 62 mm liegt.

14. Butterfett in Form von Perlen nach Anspruch 13, dadurch gekennzeichnet, daß die Größe der Perlen im Bereich von 5 bis 25 mm liegt.

15. Butterfett in Form von Perlen nach einem der Ansprüche 8 bis 14, dadurch gekennzeichnet, daß die Butter nicht mehr als 1% Wasser enthält.

16. Butterfett in Form von Perlen nach einem der Ansprüche 8 bis 15, dadurch gekennzeichnet, daß es weniger als 1% Wasser enthält.

17. Butterfett in Form von Perlen nach einem der Ansprüche 8 bis 16, dadurch gekennzeichnet, daß der Prozentsatz an Feststoffen, gemessen durch NMR, wie folgt ist:

70 bis 90% bei   0°C

60 bis 70% bei 20°C

30 bis 43% bei 36°C

10 bis 28% bei 42°C.

18. Trockennahrungsmittelmischung, die Mehl, eine wirksame Menge en Treibmittel und 2 bis 25 Gew.-% Butterperlen gemäß einem der Ansprüche 8 bis 17 oder wie hergestellt nach dem Verfahren gemäß einem der Ansprüche 1 bis 7, enthält.

19. Trockennahrungsmittelmischung nach Anspruch 18, wobei die Mischung für die Herstellung von Pfannkuchen, Zwieback, Keksen, Semmeln, Waffeln, Blechkuchen, Maisbrot oder Teegebäck geeignet ist.

20. Trockennahrungsmittelmischung nach einem der Ansprüche 18 oder 19, die Milch- und Eifeststoffe einschließt.

21. Teig, hergestellt aus einer Trockennahrungsmittelmischung gemäß einem der Ansprüche 18 bis 20.

22. Gebackenes Nahrungsmittel, hergestellt aus einem Teig gemäß Anspruch 21.

**Revendications**

1. Procédé pour préparer des perles de graisse, caractérisé par la sélection d'une graisse ayant une teneur en solides, mesurée par résonance magnétique nucléaire, à température ambiante, d'au moins 20%, et un point de fusion permettant à la graisse d'être fondue en dessous d'environ 80°C.

a) fusion de la graisse à une température d'au plus 93°C,

b) refroidissement de la graisse fondue à une température d'environ 1,5 à 4,5°C en dessous du point de clarification de la graisse, à laquelle se forment suffisamment de solides pour que des gouttelettes de la graisse gardent leur forme,

c) formation de gouttelettes de la graisse à cette température, et

d) refroidissement et collationnement des gouttelettes.

2. Procédé selon la revendication 1, caractérisé en ce que les gouttelettes ont la forme de cônes tronqués.

3. Procédé selon la revendication 1 ou 2, caractérisé en ce que la graisse fondue est presque opaque avant d'être formée en gouttes.

4. Procédé selon l'une des revendications précédentes, caractérisé en ce que des solides sont ajoutés à la masse fondue avant que la masse fondue atteigne la température de 1,5 à 4,5°C en dessous du point de clarification de la graisse, afin de faciliter la cristallisation.

5. Procédé selon l'une des revendications précédentes, caractérisé en ce que la graisse est du beurre ou de la margarine.

6. Procédé selon la revendication 5, caractérisé en ce que le beurre est déshydraté.

7. Procédé selon la revendication 6, caractérisé en ce que la graisse contient en outre un triglycéride à point de fusion élevé, avec un point de fusion plus élevé que celui du beurre.

8. Composition de perles de beurre, appropriée à une utilisation pour aliments, caractérisée en ce que la composition comporte:

a) 20 à 70% de beurre ne contenant pas plus de 4% d'eau, et
b) une quantité de triglycéride à point de fusion élevé suffisante pour produire dans la composition de perles de beurre un pourcentage de solides, mesuré par résonance magnétique nucléaire, de:
   20 à 43% à 36°C,
   10 à 28% à 42°C,

la composition de perles de beurre contenant moins de 2,5% d'eau et ayant une dimension visible moyenne pas plus grande que 62 mm environ.

9. Composition de perles de beurre selon la revendication 8, caractérisée en ce que le point de fusion de la composition de perles de beurre est d'au moins 45°C.

10. Composition de perles de beurre selon la revendication 8 ou 9, caractérisée en ce que la composition de perles de beurre fond entre 45 et 50°C.

11. Composition de perles de beurre selon l'une des revendications 8 à 10, caractérisée en ce que les perles restent solides à 40°C.

12. Composition de perles de beurre selon l'une des revendications 8 à 11, caractérisée en ce que le triglycéride à point de fusion élevé est dérivé d'huiles hydrogénées de soja, de palme ou de leurs mélanges.

13. Composition de perles de beurre selon l'une des revendications 8 à 12, caractérisée en ce que la dimension des perles est de 3 à 62 mm.

14. Composition de perles de beurre selon la revendication 13, caractérisée en ce que la dimension des perles est de 5 à 25 mm.

15. Composition de perles de beurre selon l'une des revendications 8 à 14, caractérisée en ce que le beurre ne contient pas plus de 1% d'eau.

16. Composition de perles de beurre selon l'une des revendications 8 à 15, caractérisée par une teneur d'eau de moins de 1%.

17. Composition de perles de beurre selon l'une des revendications 8 à 16, caractérisée en ce que le pourcentage de solides, mesuré par résonance magnétique nucléaire, est:

de 70 à 90% à  0°C

de 60 à 70% à 20°C

de 30 à 43% à 36°C

de 10 à 28% à 42°C

18. Mélange alimentaire sec comportant de la farine, une quantité efficace de levure et 2 à 25% en poids de perles de beurre selon l'une des revendications 8 à 17, telles que préparées selon l'une des revendications 1 à 7.

19. Mélange alimentaire sec selon la revendication 17 ou 18, caractérisé en ce que le mélange est approprié à la préparation de crêpes, de biscuits, de gaufres, de gâteaux ou de muffins.

20. Mélange alimentaire sec selon l'une des revendications 18 ou 19, caractérisé en ce qu'il comporte du lait et des oeufs solides.

21. Pâte préparée à partir d'un mélange alimentaire sec selon l'une des revendications 18 à 20.

22. Aliment cuit préparé à partir d'une pâte selon la revendication 21.